# EUROPÄISCHE PATENTSCHRIFT

(11) **EP 3 820 925 B1**
(45) Veröffentlichungstag und Bekanntmachung des Hinweises auf die Patenterteilung: **11.09.2024**
(21) Anmeldenummer: 19739281.4
(22) Anmeldetag: 11.07.2019
(51) Int. Cl.: C08G 18/48, C08G 18/66, C08G 18/76, C08G 18/32, C08L 75/08

(54) **GLASFASERVERSTÄRKTES TPU**
GLASS FIBRE REINFORCED TPU
POLYURÉTHANE THERMOPLASTIQUE RENFORCÉ PAR DES FIBRES DE VERRE

(30) Priorität: 12.07.2018 EP 18183144
(43) Veröffentlichungstag der Anmeldung: 19.05.2021
(73) Patentinhaber: BASF SE, 67056 Ludwigshafen am Rhein (DE)
(72) Erfinder: HENZE, Oliver Steffen, 49448 Lemfoerde (DE); LANGE, Tanja, 49448 Lemfoerde (DE); NITZ, Birte, 49448 Lemfoerde (DE)
(74) Vertreter: BASF IP Association
(86) Internationale Anmeldenummer: PCT/EP2019/068677
(87) Internationale Veröffentlichungsnummer: WO 2020/011919

(56) Entgegenhaltungen:
- EP-A1- 2 952 531
- EP-A1- 3 318 597
- EP-A1- 3 456 783
- EP-A2- 1 336 631
- WO-A1-2007/067436
- WO-A1-2007/118827
- WO-A1-2015/197515
- WO-A1-2017/195934
- WO-A1-2019/121274
- WO-A1-2019/121277
- WO-A1-99/11712
- WO-A2-03/059817
- CN-A- 103 819 891
- CN-A- 104 212 159
- CN-A- 105 085 861
- CN-A- 105 153 679
- CN-A- 106 366 286
- CN-A- 107 778 829
- CN-A- 107 987 239
- CN-A- 108 084 393
- US-A1- 2016 264 710
- US-A1- 2019 055 342

## Beschreibung

Die vorliegende Erfindung betrifft eine Zusammensetzung enthaltend ein thermoplastisches Polyurethan (TPU-1) erhalten oder erhältlich durch Umsetzung einer Polyisocyanatzusammensetzung (IZ) mit einer Polyolzusammensetzung (PZ), wobei die Polyolzusammensetzung (PZ) mindestens ein Polyol (P1), einen Kettenverlängerer (KV1) und einen Kettenverlängerer (KV2) enthält; und einen Füllstoff (F1) sowie ein Verfahren zur Herstellung derartiger Zusammensetzungen. Weiter betrifft die vorliegende Erfindung auch die Verwendung einer erfindungsgemäßen Zusammensetzung zur Herstellung eines Formkörpers sowie einen Formkörper, enthaltend eine erfindungsgemäße Zusammensetzung.

Füllstoffhaltige thermoplastische Polyurethane werden beispielsweise in US 2016/264710A1, CN 104 212 159 A, WO 2017/195934A1, CN 106 366 286 A, WO 2007/118827 A1 oder WO 2015/197515 A1 offenbart.

Glasfaserverstärkte thermoplastische Polyurethane sind an sich bekannt. Es sind Hochleistungswerkstoffe, die ausgezeichnete mechanische Eigenschaften mit sehr geringen Wärmeausdehnungskoeffizienten vereinen. Diese Werkstoffe sind hochbelastbar und werden in ganz verschiedenen Anwendungen eingesetzt.

Gute glasfaserverstärkte thermoplastische Polyurethane lassen sich beispielsweise aus MDI basierten thermoplastischen Polyurethanen fertigen. Die auf MDI basierte Hartphase resultiert in mechanisch sehr guten Eigenschaften.

Interessant sind auch polyetherbasierte glasfaserverstärkte TPU, die sehr hohe Schlagzähigkeiten vor allem bei niedrigen Temperaturen aufweisen. Diese Werkstoffe werden bei Sportartikeln wie Skischuhen und Ski für verschiedene funktionelle Bauteile eingesetzt.

Für einige Anwendungen werden jedoch sehr steife Materialien mit E-Modulen größer 10000 MPa benötigt. Geeignete Materialien sind aber sehr schwierig herzustellen, da zum einen sehr steife TPU Ausgangsmaterialien benötigt werden, zum anderen sehr hohe Füllgrade an Glasfasern erreicht werden müssen.

Eine der vorliegenden Erfindung zugrundeliegende Aufgabe war es daher, verstärkte thermoplastische Polyurethane bereitzustellen, die eine hohe Steifigkeit aufweisen. Weiterhin sollten die thermoplastische Polyurethane gute mechanische Eigenschaften und gute Tieftemperatureigenschaften aufweisen und gut zu verarbeiten sein.

Erfindungsgemäß wird diese Aufgabe gelöst durch eine Zusammensetzung enthaltend
(a) ein thermoplastisches Polyurethan (TPU-1) erhalten oder erhältlich durch Umsetzung einer Polyisocyanatzusammensetzung (IZ) mit einer Polyolzusammensetzung (PZ), wobei die Polyolzusammensetzung (PZ) mindestens ein Polyol (P1), einen Kettenverlängerer (KV1) und einen Kettenverlängerer (KV2) enthält, wobei die Kettenverlängerer in einem molaren Mischungsverhältnis KV1:KV2 im Bereich von 20:1 bis 3:1 eingesetzt werden; und
(b) einen Füllstoff (F1), wobei der Füllstoff (F1) faserförmig ist.

Überraschend wurde gefunden, dass durch die erfindungsgemäße Kombination des eingesetzten thermoplastischen Polyurethans und des Füllstoffs Zusammensetzungen erhalten werden, die ein verbessertes Eigenschaftsprofil aufweisen. So kann zum einen der Schmelzbereich der sehr steifen TPU durch die Verwendung der erfindungsgemäßen spezifischen Polyolzusammensetzung optimiert werden. Es wurde gefunden, dass durch die Zugabe eines zweiten Kettenverlängerers bei der Synthese der sehr steifen TPU Ausgangsmaterialien erhalten werden, mit denen glasfaserverstärkte TPU mit E-Modulen von oberhalb 10000MPa hergestellt werden können.

Die erfindungsgemäße Zusammensetzung enthält mindestens einen Füllstoff (F1) und ein thermoplastisches Polyurethan (TPU-1). Das thermoplastische Polyurethan (TPU-1) ist dabei im Rahmen der vorliegenden Erfindung erhalten oder erhältlich durch Umsetzung einer Polyisocyanatzusammensetzung (IZ) mit einer Polyolzusammensetzung (PZ), wobei die Polyolzusammensetzung (PZ) mindestens ein Polyol (P1), einen Kettenverlängerer (KV1) und einen Kettenverlängerer (KV2) enthält.

Thermoplastische Polyurethane sind grundsätzlich bekannt. Die Herstellung erfolgt üblicherweise durch Umsetzung von Isocyanaten und gegenüber Isocyanaten reaktiven Verbindungen und Kettenverlängerungsmittel gegebenenfalls in Gegenwart von mindestens einem Katalysator und/oder üblichen Hilfsstoffen und/oder Zusatzstoffen. Isocyanate, gegenüber Isocyanaten reaktive Verbindungen und Kettenverlängerungsmittel werden einzeln oder zusammen auch als Aufbaukomponenten angesprochen.

Erfindungsgemäß ist das thermoplastische Polyurethan (TPU-1) erhältlich durch Umsetzung einer Polyisocyanatzusammensetzung (IZ) mit einer Polyolzusammensetzung (PZ). Die Polyolzusammensetzung (PZ) enthält mindestens ein Polyol (P1), einen Kettenverlängerer (KV1) und einen Kettenverlängerer (KV2). Die Polyolzusammensetzung kann im Rahmen der vorliegenden Erfindung auch weitere Polyole enthalten.

Als Kettenverlängerungsmittel (KV1) und (KV2) können allgemein bekannte aliphatische, araliphatische, aromatische und/oder cycloaliphatische Verbindungen mit einem Molekulargewicht, bevorzugt mittleren Molekulargewicht von 50 g/mol bis 499 g/mol, bevorzugt 2-funktionelle Verbindungen, eingesetzt werden. Bevorzugt sind beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, weiter bevorzugt unverzweigte Alkandiole, insbesondere Propan-1,3-diol, Butan-1,4-diol und Hexan-1 ,6-diol.

Gemäß einer weiteren Ausführungsform betrifft die vorliegende Erfindung demgemäß auch eine Zusammensetzung wie zuvor beschrieben, wobei der Kettenverlängerer (KV1) und/oder der Kettenverlängerer (KV2) ausgewählt ist aus der Gruppe bestehend aus 1,2-Ethandiol, 1,3-Propandiol, 1,4-Butandiol und 1,6-Hexandiol, Diethylenglykol, Triethylenglykol, Hydrochinon-bis-2-hydroxyethylether und Bis-2(hydroxy ethyl)terephthalat.

Der Kettenverlängerer (KV1) ist im Rahmen der vorliegenden Erfindung weiter bevorzugt ausgewählt aus der Gruppe bestehend aus 1,2-Ethandiol, 1,3-Propandiol, 1,4-Butandiol und 1,6-Hexandiol. Gemäß einer weiteren Ausführungsform betrifft die vorliegende Erfindung demgemäß auch eine Zusammensetzung wie zuvor beschrieben, wobei der Kettenverlängerer (KV1) 1,4-Butandiol ist.

Im Rahmen der vorliegenden Erfindung wird vorzugsweise 1,3-Propandiol oder 1,6-Hexandiol als Kettenverlängerer (KV2) eingesetzt, weiter bevorzugt wird als Kettenverlängerer (KV2) 1,3-Propandiol eingesetzt. Gemäß einer weiteren Ausführungsform betrifft die vorliegende Erfindung daher ein thermoplastisches Polyurethan wie zuvor beschrieben, wobei der Kettenverlängerer (KV2) 1,3-Propandiol ist.

Erfindungsgemäß ist es auch möglich, dass ein mehrwertiger Alkohol, beispielsweise Propandiol und/oder ein weiteres Diol, eingesetzt wird, der zumindest teilweise aus nachwachsenden Rohstoffen gewonnen wurde. Dabei ist es möglich, dass der mehrwertige Alkohol teilweise oder vollständig aus nachwachsenden Rohstoffen gewonnen wurde. Erfindungsgemäß kann mindestens einer der eingesetzten mehrwertigen Alkohole zumindest teilweise aus nachwachsenden Rohstoffen gewonnen werden.

Sogenanntes Bio-1,3-Propandiol kann beispielsweise aus Mais und/oder Zucker gewonnen werden. Eine weitere Möglichkeit ist die Umwandlung von Glycerinabfällen aus der Biodiesel-Produktion. Gemäß einer weiteren bevorzugten Ausführungsform der Erfindung ist der mehrwertige Alkohol 1,3-Propandiol, das zumindest teilweise aus nachwachsenden Rohstoffen gewonnen wurde.

Gemäß einer weiteren Ausführungsform betrifft die vorliegende Erfindung demgemäß eine Zusammensetzung wie zuvor beschrieben, wobei das thermoplastische Polyurethan zu mindestens 30 % auf nachwachsenden Rohstoffen basiert. Eine geeignete Bestimmungsmethode ist beispielsweise die C14 Methode.

Erfindungsgemäß können auch weitere Kettenverlängerer in der Polyolzusammensetzung eingesetzt werden.

Erfindungsgemäß enthält die Polyolzusammensetzung (PZ) mindestens das Polyol (P1) als gegenüber Isocyanaten reaktive Verbindung. Im Rahmen der vorliegenden Erfindung können prinzipiell alle an sich geeigneten Polyole eingesetzt werden, beispielsweise Polyesterole, Polyetherole und/oder Polycarbonatdiole. Beispielsweise kann das eingesetzte Polyol ein Molekulargewicht (Mn) im Bereich von 500 g/mol bis 8000 g/mol, aufweisen, und bevorzugt einer mittleren Funktionalität gegenüber Isocyanaten von 1,8 bis 2,3, bevorzugt 1,9 bis 2,2, insbesondere 2. Das zahlenmittlere Molekulargewicht wird nach DIN 55672-1 bestimmt soweit nicht anders angegeben.

Bevorzugt weist das eingesetzte Polyol (P1) ein Molekulargewicht im Bereich von 600 bis 2000 Dalton auf, weiter bevorzugt ein Molekulargewicht im Bereich von 750 bis 1500 Dalton, insbesondere ein Molekulargewicht von etwa 1000 Dalton.

Als Polyesterole können Polyester auf Basis von Disäuren und Diolen eingesetzt werden. Als Diole werden vorzugsweise Diole mit 2 bis 10 Kohlenstoffatomen, beispielsweise Ethandiol, Butandiol oder Hexandiol, insbesondere 1,4 Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus.

Weiter können im Rahmen der vorliegenden Erfindung Polyetherpolyole eingesetzt werden, beispielsweise solche auf der Basis von allgemein bekannten Startersubstanzen und üblichen Alkylenoxiden, bevorzugt Ethylenoxid, Propylenoxid und/oder Butylenoxid, weiter bevorzugt Polyetherole basierend auf Propylenoxid-1 ,2 und Ethylenoxid und insbesondere Polyoxytetramethylenglykole. Der Vorteil der Polyetherpolyole liegt u. a. in der höheren Hydrolysestabilität.

Geeignet sind auch niedrig ungesättigte Polyetherole. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt.

Derartige hochaktive Katalysatoren sind bevorzugt Cäsiumhydroxid und Multimetallcyanidkatalysatoren, auch als DMC-Katalysatoren bezeichnet. Ein häufig und bevorzugt eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Weiterhin können im Rahmen der vorliegenden Erfindung Polytetrahydrofurane eingesetzt werde, beispielsweise mit einem mittleren Molekulargewicht Mn im Bereich von 400 bis 1800 g/mol, vorzugsweise aus Polytetrahydrofuranen mit einem mittleren Molekulargewicht Mn im Bereich von 600 bis 1500 g/mol, weiter bevorzugt aus Polytetrahydrofuranen mit einem mittleren Molekulargewicht Mn im Bereich von 750 bis 1250 g/mol, beispielsweise im Bereich von 900 bis 1100 g/mol.

Es wurde gefunden, dass insbesondere bei der Verwendung von Polyolen mit einem mittleren Molekulargewicht im Bereich von 900 bis 1100 g/mol Zusammensetzungen erhalten werden, die ein besonders vorteilhaftes Eigenschaftsprofil aufweisen. So weisen die erfindungsgemäßen Zusammensetzungen zum einen einen niedrigen Schmelzpunkt auf, zum anderen gute Tieftemperatureigenschaften.

Die Polyolzusammensetzung kann jedoch im Rahmen der vorliegenden Erfindung neben dem Polyol (P1) und den Kettenverlängerern (KV1) und (KV2) auch weitere gegenüber Isocyanaten reaktive Verbindungen enthalten. Beispielsweise kann die Polyolzusammensetzung weitere Polyole mit einem mittleren Molekulargewicht Mn im Bereich von 800 bis 1200 g/mol enthalten.

Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf 1,4-Butandiol, 1,5-Pentandiol oder 1,6-Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf 1,4-Butandiol und 1,6-Hexandiol, Polycarbonatdiole basierend auf 1,5-Pentandiol und 1,6-Hexandiol, Polycarbonatdiole basierend auf 1,6-Hexandiol, und Mischungen aus zwei oder mehr dieser Polycarbonatdiole eingesetzt. Geeignete Polycarbonatdiole weisen beispielsweise ein mittleres Molekulargewicht Mn im Bereich von 800 bis 1200 g/mol auf.

Es wurde gefunden, dass bei der Verwendung von Polycarbonatdiolen Zusammensetzungen erhalten werden, die für solche Anwendungen geeignet sind, die eine gute Hydrolysebeständingkeit und gute Alterungsbeständigkeit aufweisen. So weisen die erfindungsgemäßen Zusammensetzungen, wenn Polycarbonatdiole als Polyole eingesetzt werden, neben den guten Tieftemperatureigenschaften auch eine hohe Hydrolysebeständigkeit und gute Alterungsbeständigkeit auf.

Vorzugsweise wird im Rahmen der vorliegenden Erfindung als Polyol (P1) ein Polyetherol eingesetzt.

Gemäß einer weiteren Ausführungsform betrifft die vorliegende Erfindung demgemäß auch eine Zusammensetzung wie zuvor beschrieben, wobei das Polyol (P1) ein Polyetherpolyol ist.

Im Rahmen der vorliegenden Erfindung wird bei der Herstellung des thermoplastischen Polyurethans (TPU-1) die Isocyanatzusammensetzung (IZ) eingesetzt. Die Isocyanatzusammensetzung enthält mindestens ein Polyisocyanat, vorzugsweise mindestens ein Diisocyanat.

Im Rahmen der vorliegenden Erfindung sind prinzipiell die üblicherweise eingesetzten organischen Isocyanate geeignet. Als organische Isocyanate können aliphatische, cycloaliphatische, araliphatische und/oder aromatische Isocyanate eingesetzt werden, weiter bevorzugt Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2`-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3`-Dimethyl-diphenyl-diisocyanat, 1,2-Diphenylethandiisocyanat und/oder Phenylendiisocyanat. Besonders bevorzugt wird nur 4,4'-MDI eingesetzt.

Gemäß einer weiteren Ausführungsform betrifft die vorliegende Erfindung daher eine Zusammensetzung wie zuvor beschrieben, wobei das thermoplastische Polyurethan auf 4,4'-Diphenylmethandiisocyanat basiert.

Weitere geeignete aliphatische Isocyanate sind beispielsweise Hexamethylendiisocyanat (HDI), oder 1-Isocyanato-4-[(4-isocyanatocyclohexyl) methyl]cyclohexan (H12MDI).

Besonders bevorzugte Isocyanate sind erfindungsgemäß Hexamethylendiisocyanat (HDI), 2,2`-, 2,4'- und/oder 4,4`-Diphenylmethandiisocyanat (MDI) und 2,4- und/oder 2,6-Toluylendiisocyanat (TDI), oder 1-Isocyanato-4-[(4-isocyanatocyclohexyl) methyl]cyclohexan (H12MDI), wobei 2,2`-, 2,4'- und/oder 4,4`-Diphenylmethandiisocyanat (MDI) besonders bevorzugt ist, insbesondere 4,4`-Diphenylmethandiisocyanat.

Gemäß einer weiteren Ausführungsform betrifft die vorliegende Erfindung demgemäß auch eine Zusammensetzung wie zuvor beschrieben, wobei die Polyisocyanatzusammensetzung (IZ) ein Polyisocyanat (PI) enthält, ausgewählt aus der Gruppe bestehend aus 1,2-, 1,3-, und/oder 1,4-Phenylendiisocyanat, Triphenylmethan-4,4',4"-triisocyanat, Naphthylen-1,5-diisocyanat (NDI), 2,4- und/oder 2,6-Toluendiisocyanat (TDI), 2,4'-, 4,4'- und/oder 2,2-Diphenyldiisocyanat, 2,2'-, 2,4'- und/oder 4,4'-Diphenylmethandiisocyanat (MDI), Polyphenylpolymethylenpolyisocyanat, 1,2-, 1,3- und/oder 1,4-Xylylendiisocyanat und m-Tetramethylxylyendiisocyanat (TMXDI).

Neben der Isocyanatzusammensetzung (IZ) und der Polyolzusammensetzung (PZ) können zur Herstellung des thermoplastischen Polyurethans (TPU1) weitere Komponenten eingesetzt werden, beispielsweise geeignete Katalysatoren oder Hilfsmittel.

Katalysatoren, die insbesondere die Reaktion zwischen den NCO-Gruppen der Diisocyanate und den Hydroxylgruppen der gegenüber Isocyanaten reaktiven Verbindung und dem Kettenverlängerungsmittel beschleunigen, sind in einer bevorzugten Ausführungsform tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen, wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen, in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismutoctanoat.

Die Katalysatoren werden bevorzugt in Mengen von 0,0001 bis 0,1 Gew.-Teilen pro 100 Gew.-Teile der mit Isocyanaten reaktiven Verbindung eingesetzt. Bevorzugt werden Zinnkatalysatoren eingesetzt, insbesondere Zinndioktoat.

Neben Katalysatoren können auch übliche Hilfsstoffe hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Herstellungsverfahren für thermoplastische Polyurethane werden beispielsweise offenbart in EP 0 922 552 A1, DE 101 03 424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Füllstoff eingebracht und homogen verteilt. Das homogene Verteilen erfolgt vorzugsweise in einem Extruder, bevorzugt in einem Zweiwellenextruder. Erfindungsgemäß ist es bevorzugt, den Füllstoff portionsweise zuzusetzen, beispielsweise einen Teil am Einzug des Extruders und einen weiteren Teil an einer zweiten Dosierstelle, beispielsweise einem Seitenstopfer. Zur Einstellung von Härte der TPU können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel ansteigt.

Erfindungsgemäß kann das Mischungsverhältnis der zur Herstellung des thermoplastischen Polyurethans eingesetzten Komponenten in weiten Bereichen variieren. Beispielsweise können die Kettenverlängerer und das eingesetzte Polyol in einem molaren Mischungsverhältnis im Bereich von 20:1 bis 1:1 eingesetzt werden, bevorzugt im Bereich von 18:1 bis 2:1, weiter bevorzugt im Bereich von 17:1 bis 3:1, besonders bevorzugt im Bereich von 15:1 bis 4:1.

Erfindungsgemäß werden die Kettenverlängerer in einem molaren Mischungsverhältnis KV1:KV2 im Bereich von 20:1 bis 3:1 eingesetzt, bevorzugt im Bereich von 15:1 bis 4:1, weiter bevorzugt im Bereich von 17:1 bis 3:1, besonders bevorzugt im Bereich von 15:1 bis 4:1.

Das erfindungsgemäß eingesetzte thermoplastische Polyurethan hat vorzugsweise eine Härte im Bereich von 40D bis 90D, bestimmt gemäß DIN ISO 7619-1 (Shore- Härteprüfung A (3s)) auf, bevorzugt im Bereich von 50D bis 90D, bestimmt gemäß DIN ISO 7619-1, weiter bevorzugt im Bereich von 60D bis 90D, bestimmt gemäß DIN ISO 7619-1, besonders bevorzugt im Bereich von 70D bis 90D, bestimmt gemäß DIN ISO 7619-1.

Gemäß einer weiteren Ausführungsform betrifft die vorliegende Erfindung demgemäß auch eine Zusammensetzung wie zuvor beschrieben, wobei das thermoplastische Polyurethan eine Shore Härte im Bereich von 40D bis 90D aufweist, bestimmt gemäß DIN ISO 7619-1.

Zur Herstellung der erfindungsgemäßen thermoplastischen Polyurethane werden die Aufbaukomponenten bevorzugt in Gegenwart von Katalysatoren und gegebenenfalls Hilfsmitteln und/oder Zusatzstoffen in solchen Mengen zur Reaktion gebracht, dass das Äquivalenzverhältnis von NCO-Gruppen der Diisocyanate zur Summe der Hydroxylgruppen der weiteren Aufbaukomponenten 0,9 bis 1,1 : 1, vorzugsweise 0,95 bis 1,05 : 1 und insbesondere ungefähr 0,95 bis 1,00 : 1 beträgt.

Die erfindungsgemäße Zusammensetzung enthält das mindestens eine thermoplastische Polyurethan (TPU1) in einer Menge im Bereich von 40 Gew.-% bis 60 Gew.-%, bezogen auf die gesamte Zusammensetzung, insbesondere im Bereich von 45 Gew.-% bis 55 Gew.-%, bezogen auf die gesamte Zusammensetzung, bevorzugt im Bereich von 48 Gew.-% bis 52 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil des thermoplastischen Polyurethans in der Zusammensetzung im Bereich von 40 Gew.-% bis 60 Gew.-%, bezogen auf die gesamte Zusammensetzung, liegt.

Dabei ergibt die Summe aller Komponenten der Zusammensetzung jeweils 100 Gew.-%.

Vorzugsweise werden erfindungsgemäß thermoplastische Polyurethane eingesetzt, bei denen das thermoplastische Polyurethan ein mittleres Molekulargewicht (M_{W}) im Bereich von 50000 bis 500000 Da aufweist. Die Obergrenze für das mittlere Molekulargewicht (Mw) der thermoplastischen Polyurethane wird in aller Regel durch die Verarbeitbarkeit, wie auch das gewünschte Eigenschaftsspektrum bestimmt. Weiter bevorzugt weist das thermoplastische Polyurethan ein mittleres Molekulargewicht (M_{W}) im Bereich von 50000 bis 250000 Da auf, insbesondere bevorzugt im Bereich von 50000 bis 150000 Da.

Erfindungsgemäß ist es auch möglich, dass die Zusammensetzung zwei oder mehr thermoplastische Polyurethane enthält, die sich beispielsweise in ihrem mitterlen Molekulargewicht oder in ihrer chemischen Zusammensetzung unterscheiden.

Die Herstellung des thermoplastischen Polyurethans kann nach den bekannten Verfahren diskontinuierlich oder kontinuierlich, beispielsweise mit Reaktionsextrudern oder dem Bandverfahren nach dem one-shot-Verfahren erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten einzeln oder als Gemisch in den Extruder eingeführt, z. B. bevorzugt bei Temperaturen von 100 °C bis 280 °C, weiter bevorzugt bei 140 °C bis 250 °C zur Reaktion gebracht, das erhaltene Polyurethan wird dann extrudiert, abgekühlt und granuliert.

Die erfindungsgemäße Zusammensetzung enthält weiterhin einen faserförmigen Füllstoff (F1). Erfindungsgemäß kann die chemische Natur und die Form des Füllstoffs (F1) in weiten Bereichen variieren, solange eine ausreichende Verträglichkeit mit dem thermoplastischen Polyurethan (TPU-1) gegeben ist. Dabei sollte der Füllstoff (F1) so gewählt werden, dass die Form und Partikelgröße des Füllstoffs eine ausreichende Mischbarkeit und gleichmäßige Verteilung in der Zusammensetzung ermöglichen.

Geeignete Füllstoffe sind beispielsweise Glasfasern, Kohlenstoffasern, Aramid- Fasern, Kaliumtitanat-Fasern, Fasern aus flüssig-kristallinen Polymeren, organische faserförmige Füllstoffe oder anorganische Verstärkungsmaterialien. Organische faserförmige Füllstoffe sind zum Beispiel Cellulosefasern, Hanffasern, Sisal oder Kenaf. Anorganische Verstärkungsmaterialien sind beispielsweise Keramikfüllstoffe, wie Aluminium- und Bornitrid, oder mineralische Füllstoffe, wie Asbest, Talkum, Wollastonit, Microvit, Silikate, Kreide, calcinierte Kaoline, Glimmer und Quarzmehl. Erfindungsgemäß bevorzugt ist der Füllstoff (F1) ausgewählt aus der Gruppe bestehend aus Glasfasern, Kohlenstoffasern, Aramid- Fasern, Kaliumtitanat-Fasern, Fasern aus flüssig-kristallinen Polymeren, Metallfasern, Polyesterfasern, Polyamidfasern, organischen faserförmigen Füllstoffen und anorganischen faserförmigen Füllstoffen.

Gemäß einer weiteren Ausführungsform betrifft die vorliegende Erfindung demgemäß auch eine Zusammensetzung wie zuvor beschrieben, wobei der Füllstoff (F1) ausgewählt aus der Gruppe bestehend aus Glasfasern, Kohlenstoffasern, Aramid- Fasern, Kaliumtitanat-Fasern, Fasern aus flüssig-kristallinen Polymeren, Metallfasern, Polyesterfasern, Polyamidfasern, organischen faserförmigen Füllstoffen und anorganischen faserförmigen Füllstoffen.

Die Dimension der eingesetzten Füllstoffe kann in üblichen Bereichen variieren. Vorzugsweise weist der eingesetzte Füllstoff eine Länge im Bereich von 3 mm bis 4 mm und einen Durchmesser im Bereich von 1 µm bis 20 µm aufweist, jeweils bestimmt gemäß ASTM D578-98. Gemäß einer weiteren Ausführungsform betrifft die vorliegende Erfindung demgemäß auch eine Zusammensetzung wie zuvor beschrieben, wobei der Füllstoff (F1) eine Länge im Bereich von 3 mm bis 4 mm und einen Durchmesser im Bereich von 1 µm bis 20 µm aufweist, jeweils bestimmt gemäß ASTM D578-98.

Die faserförmigen Füllstoffe können zur besseren Verträglichkeit mit dem thermoplastischen Kunststoff vorbehandelt sein, beispielsweise mit einer Silanverbindung.

Bevorzugt werden anorganische faserförmige Füllstoffe verwendet. Bei Verwendung von anorganischen faserförmigen Füllstoffen wird ein größerer Verstärkungseffekt sowie eine höhere Wärmestandfestigkeit gefunden.

Erfindungsgemäß kann die Zusammensetzung auch zwei oder mehr Füllstoffe enthalten.

Der Anteil des Füllstoffs (F1) in der Zusammensetzung liegt beispielsweise im Bereich von 40 bis 60 Gew.-% bezogen auf die gesamte Zusammensetzung, vorzugsweise im Bereich von 45 bis 55 Gew.-% bezogen auf die gesamte Zusammensetzung, weiter bevorzugt im Bereich von 48 bis 52 Gew.-% bezogen auf die gesamte Zusammensetzung.

Gemäß einer weiteren Ausführungsform betrifft die vorliegende Erfindung demgemäß auch eine Zusammensetzung wie zuvor beschrieben, wobei der Füllstoff (F1) in einer Menge im Bereich von 40 bis 60 Gew.-% bezogen auf die gesamte Zusammensetzung enthalten ist.

Erfindungsgemäß kann die Zusammensetzung neben dem thermoplastischen Polyurethan (TPU1) und dem Füllstoff (F1) auch weitere Komponenten enthalten, beispielsweise Entformungshilfsmittel, UV Schutz, Antioxidant oder Farbpigmente.

Gemäß einem weiteren Aspekt betrifft die vorliegende Erfindung auch ein Verfahren zur Herstellung einer Zusammensetzung umfassend den Schritt
(i) Mischen der Komponenten
   (a) ein thermoplastisches Polyurethan (TPU-1) erhalten oder erhältlich durch Umsetzung einer Polyisocyanatzusammensetzung (IZ) mit einer Polyolzusammensetzung (PZ),
      wobei die Polyolzusammensetzung (PZ) mindestens ein Polyol (P1), einen Kettenverlängerer (KV1) und einen Kettenverlängerer (KV2) enthält, wobei die Kettenverlängerer in einem molaren Mischungsverhältnis KV1:KV2 im Bereich von 20:1 bis 3:1 eingesetzt werden; und
   (b) einen Füllstoff (F1), wobei der Füllstoff (F1) faserförmig ist.

Bezüglich der bevorzugten Ausführungsformen wird auf die obigen Ausführungen zu den bevorzugt eingesetzten Komponenten Bezug genommen.

Geeignete Verfahren zur Herstellung der Zusammensetzung sind dem Fachmann an sich bekannt. Im Rahmen der vorliegenden Erfindung werden für das Kompoundieren üblicherweise an sich bekannte Verfahren eingesetzt.

Beispielsweise kann die Zusammensetzung in an sich bekannter Weise in einem Extruder hergestellt werden, beispielsweise in einem Zweiwellenextruder. Erfindungsgemäß ist es bevorzugt, den Füllstoff portionsweise zuzusetzen, beispielsweise einen Teil am Einzug des Extruders und einen weiteren Teil an einer zweiten Dosierstelle, beispielsweise einem Seitenstopfer. Dabei liegt die Temperatur vorzugsweise im Bereich von 160 bis 230°C. Im Rahmen der vorliegenden Erfindung kann der Extruder beispielsweise bei einer Drehzahl im Bereich von 150 bis 300 Umdrehungen pro Minute betrieben werden.

Die vorliegende Erfindung betrifft weiterhin eine Zusammensetzung erhalten oder erhältlich nach einem erfindungsgemäßen Verfahren.

Die vorliegende Erfindung betrifft auch die Verwendung der erfindungsgemäßen Zusammensetzung oder einer Zusammensetzung erhalten oder erhältlich nach einem erfindungsgemäßen Verfahren zur Herstellung eines Formkörpers.

Die Herstellung erfolgt bevorzugt aus Granulaten, durch Spritzguss, Kalandrieren, Pulversintern, oder Extrusion und/oder durch zusätzliches Schäumen der erfindungsgemäßen Zusammensetzung.

Weiterhin betrifft die vorliegende Erfindung gemäß einem weiteren Aspekt auch Formkörper, enthaltend eine erfindungsgemäße Zusammensetzung gemäß oder eine Zusammensetzung erhalten oder erhältlich nach einem erfindungsgemäßen Verfahren.

Die vorliegende Erfindung betrifft auch die Verwendung der erfindungsgemäßen Zusammensetzung wie zuvor beschrieben zur Herstellung von Formkörpern, beispielsweise von Teilen eines Schuhs oder von Teilen von Skistiefeln.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal implizit umfasst, auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### Beispiele:

### 1. Verwendete Materialien

Chopvantage HP3550 EC10-3,8: Glasfaser von PPG Industries Fiber Glass, Energieweg 3, 9608 PC Westerbroek, The Netherlands. E-Glas, Filamentdurchmesser 10µm, Länge 3,8mm.

TPU 1: TPU der Shore Härte 60D, basiert auf Polytetrahydrofuran (PTHF) mit einem Molekulargewicht (Mn) von 1000 Dalton, 1,4-Butandiol, MDI.

TPU 2: TPU der Shore Härte 83D, basiert auf Polytetrahydrofuran (PTHF) mit einem Molekulargewicht (Mn) von 1000 Dalton, 1,4-Butandiol, MDI.

TPU 3: TPU der Shore Härte 83D, basiert auf Polytetrahydrofuran (PTHF) mit einem Molekulargewicht (Mn) von 1000 Dalton, 1,4-Butandiol, 1,3-Propandiol, MDI.

TPU 4: Glasfasergefülltes TPU der Shore Härte 70D hergestellt durch Einkompoundieren von 48% der Glasfaser Chopvantage HP3550 EC10-3,8 in TPU 1.

TPU 5: Glasfasergefülltes TPU der Shore Härte 75D hergestellt durch Einkompoundieren von 48% der Glasfaser Chopvantage HP3550 EC10-3,8 in TPU 2 (nicht herstellbar, siehe Tabelle 4).

TPU 6: Glasfasergefülltes TPU der Shore Härte 75D hergestellt durch Einkompoundieren von 48% der Glasfaser Chopvantage HP3550 EC10-3,8 in TPU 3.

### 2. Herstell-Beispiele

### 2.1 Herstellung im Handgußverfahren (TPU 1-3)

Die in der zugrundeliegenden Rezeptur (Tabelle 1) festgelegte Menge Polyol und der Kettenverlängerer wird in der Weißblechdose eingewogen und kurz mit Stickstoff beschleiert. Die Dose wir mit einem Deckel verschlossen und im Heizschrank auf ca. 90°C aufgeheizt.

Ein weiterer Heizschrank zum Tempern der Schwarte wird auf 80 °C vorgeheizt. Die Teflonschale wird auf den Heiztisch gestellt und dieser auf 125°C eingestellt.

Die berechnete Menge an flüssigen Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48°C im Heizschrank gelagert.

Zusätze wie Hydrolyseschutz, Antioxidans, die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80°C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110°C wird die Reaktionsmischung in die Teflonschalen, die auf 125°C vorgeheizt sind, ausgegossen.

10min nach Start der Stoppuhr wird die Schwarte vom Heiztisch genommen und anschließend für 15h im Heizschrank bei 80°C gelagert. Die ausgekühlte Schwarte wird in der Schneidmühle zerkleinert. Das Granulat wird nun für 3h bei 110°C getrocknet und trocken gelagert.

Grundsätzlich kann dieses Verfahren auf den Reaktionsextruder oder das Bandverfahren übertragen werden.

**Tabelle 1: Rezepturen der TPU 1-3**

| | TPU 1 | TPU 2 | TPU 3 |
|---|---|---|---|
| PTHF 1000 [g] | 393,2 | 100 | 100 |
| Lupranat MET [g] | 471,8 | 395,5 | 395,5 |
| Butandiol-1,4 [g] | 135,0 | 133,4 | 121,7 |
| Propandiol - 1,3 [g] | - | - | 9.8 |
| | | | |

**Tabelle 2: Eigenschaften der TPU 1-3**

| | | TPU 1 | TPU 2 | TPU 3 |
|---|---|---|---|---|
| Zugfestigkeit [MPa] | DIN 53504-S2 | 50 | 70 | 67 |
| Reißdehnung [%] | DIN 53504-S2 | 400 | 160 | 170 |
| Shore Hardness [D] | DIN ISO 7619-1 (3s) | 60 | 85 | 83 |
| E-Modul [MPa] | DIN EN ISO 527 | 200 | 2000 | 2000 |
| | | | | |

### 2.2 Herstellung TPU 4-6

In der nachfolgenden Tabelle 3 werden Zusammensetzungen aufgeführt, in denen die einzelnen Einsatzstoffe in Gewichtsanteilen (GT) angegeben sind. Die Mischungen wurden jeweils mit einem Doppelwellenextruder Typ ZE 40 A der Fa. Berstorff mit einer Verfahrensteillänge von 35 D unterteilt in 10 Gehäuse hergestellt. Verwendet wurde eine Stranggranulierung.

**Tabelle 3: Rezepturen der TPU 1-3**

| | TPU 4 (VB) | TPU 5 (VB) | TPU 6 (EB) |
|---|---|---|---|
| TPU 1 | 52 | | |
| TPU 2 | | 52 | |
| TPU 3 | | | 52 |
| Chopvantage HP3550 EC10-3,8 | 48 | 48 | 48 |

**Tabelle 4: Eigenschaften der TPU 4-6**

| | | TPU 4 (VB) | TPU 5 (VB) | TPU 6 (EB) |
|---|---|---|---|---|
| Zugfestigkeit [MPa] | DIN 53504-S2 | 93 | Nicht herstellbar. | 244 |
| Reißdehnung [%] | DIN 53504-S2 | 8 | | 3 |
| E-Modul [MPa] | DIN EN ISO 527 | 4080 | | 18300 |

### 3. Ergebnisse

Die Verarbeitung von TPU 2 ist nicht möglich. Das Material hat einen sehr hohen Schmelzbereich, die Herstellung des Glasfaserkompounds ist nicht möglich.

TPU 4 ist herstellbar, das E-Modul beträgt jedoch lediglich 4080MPa.

Überraschenderweise ist TPU 6 ist herstellbar. Das E-Modul liegt bei 18300 MPa.

### 4. Messmethoden

| | |
|---|---|
| Shore Härte A: | DIN ISO 7619-1, Shore-Härteprüfung A (3s) |
| Zugfestigkeit: | DIN EN ISO 527 |
| Reißdehnung: | DIN EN ISO 527 |
| Weiterreißfestigkeit: | DIN ISO 34-1, B (b |

### Zitierte Literatur

Kunststoffhandbuch, Band VII, herausgegeben von Vieweg und Höchtlen, Carl Hanser Verlag, München 1966 (S. 103-113)
EP 0 922 552 A1
DE 101 03 424 A1
WO 2006/072461 A1

## Patentansprüche

1. Zusammensetzung enthaltend
(a) ein thermoplastisches Polyurethan (TPU-1) erhalten oder erhältlich durch Umsetzung einer Polyisocyanatzusammensetzung (IZ) mit einer Polyolzusammensetzung (PZ),
wobei die Polyolzusammensetzung (PZ) mindestens ein Polyol (P1), einen Kettenverlängerer (KV1) und einen Kettenverlängerer (KV2) enthält, wobei die Kettenverlängerer in einem molaren Mischungsverhältnis KV1:KV2 im Bereich von 20:1 bis 3:1 eingesetzt werden; und
(b) einen Füllstoff (F1), wobei der Füllstoff (F1) faserförmig ist.

2. Zusammensetzung gemäß Anspruch 1, wobei der Kettenverlängerer (KV1) und/oder der Kettenverlängerer (KV2) ausgewählt ist aus der Gruppe bestehend aus 1,2-Ethandiol, 1,3-Propandiol, 1,4-Butandiol und 1,6-Hexandiol, Diethylenglykol, Triethylenglykol, Hydrochinon-bis-2-hydroxyethylether und Bis-2(hydroxyethyl)terephthalat.

3. Zusammensetzung gemäß Anspruch 1 oder 2, wobei der Kettenverlängerer (KV1) 1,4-Butandiol ist.

4. Zusammensetzung gemäß einem der Ansprüche 1 bis 3, wobei das Polyol (P1) ein Polyetherpolyol ist.

5. Zusammensetzung gemäß einem der Ansprüche 1 bis 4, wobei die Polyisocyanatzusammensetzung (IZ) ein Polyisocyanat (PI) enthält, ausgewählt aus der Gruppe bestehend aus 1,2-, 1,3-, und/oder 1,4-Phenylendiisocyanat, Triphenylmethan-4,4',4"-triisocyanat, Naphthylen-1,5-diisocyanat (NDI), 2,4- und/oder 2,6-Toluendiisocyanat (TDI), 2,4'-, 4,4'- und/oder 2,2-Diphenyldiisocyanat, 2,2'-, 2,4'- und/oder 4,4'-Diphenylmethandiisocyanat (MDI), Polyphenylpolymethylenpolyisocyanat, 1,2-, 1,3- und/oder 1,4-Xylylendiisocyanat und m-Tetramethylxylyendiisocyanat (TMXDI).

6. Zusammensetzung gemäß einem der Ansprüche 1 bis 5, wobei der Füllstoff (F1) ausgewählt aus der Gruppe bestehend aus Glasfasern, Kohlenstoffasern, AramidFasern, Kaliumtitanat-Fasern, Fasern aus flüssig-kristallinen Polymeren, Metallfasern, Polyesterfasern, Polyamidfasern, organischen faserförmigen Füllstoffen und anorganischen faserförmigen Füllstoffen.

7. Zusammensetzung gemäß einem der Ansprüche 1 bis 6, wobei der Füllstoff (F1) eine Länge im Bereich von 3 mm bis 4 mm und einen Durchmesser im Bereich von 1 µm bis 20 µm aufweist, jeweils bestimmt gemäß ASTM D578-98.

8. Zusammensetzung gemäß einem der Ansprüche 1 bis 7, wobei der Füllstoff (F1) in einer Menge im Bereich von 40 bis 60 Gew.-% bezogen auf die gesamte Zusammensetzung enthalten ist.

9. Zusammensetzung gemäß einem der Ansprüche 1 bis 8, wobei das thermoplastische Polyurethan eine Shore Härte im Bereich von 40D bis 90D aufweist, bestimmt gemäß DIN ISO 7619-1.

10. Verfahren zur Herstellung einer Zusammensetzung umfassend den Schritt
(i) Mischen der Komponenten
(a) ein thermoplastisches Polyurethan (TPU-1) erhalten oder erhältlich durch Umsetzung einer Polyisocyanatzusammensetzung (IZ) mit einer Polyolzusammensetzung (PZ),
wobei die Polyolzusammensetzung (PZ) mindestens ein Polyol (P1), einen Kettenverlängerer (KV1) und einen Kettenverlängerer (KV2) enthält, wobei die Kettenverlängerer in einem molaren Mischungsverhältnis KV1:KV2 im Bereich von 20:1 bis 3:1 eingesetzt werden; und
(b) einen Füllstoff (F1), wobei der Füllstoff (F1) faserförmig ist.

11. Zusammensetzung erhalten oder erhältlich nach einem Verfahren gemäß Anspruch 10.

12. Verwendung einer Zusammensetzung gemäß einem der Ansprüche 1 bis 9 oder einer Zusammensetzung erhalten oder erhältlich nach einem Verfahren gemäß Anspruch 10 zur Herstellung eines Formkörpers.

13. Formkörper, enthaltend eine Zusammensetzung gemäß einem der Ansprüche 1 bis 9 oder einer Zusammensetzung erhalten oder erhältlich nach einem Verfahren gemäß Anspruch 10.

## Claims

1. A composition comprising
(a) a thermoplastic polyurethane (TPU-1) obtained or obtainable by reaction of a polyisocyanate composition (IZ) with a polyol composition (PZ),
wherein the polyol composition (PZ) comprises at least one polyol (P1), a chain extender (KV1) and a chain extender (KV2), wherein the chain extenders are used in a molar ratio KV1:KV2 in the range from 20:1 to 3:1; and
(b) a filler (F1), wherein the filler (F1) is fibrous.

2. The composition according to claim 1, wherein the chain extender (KV1) and/or the chain extender (KV2) is selected from the group consisting of 1,2-ethanediol, 1,3-propanediol, 1,4-butanediol and 1,6-hexanediol, diethylene glycol, triethylene glycol, hydroquinone bis-2-hydroxyethyl ether and bis(2-hydroxyethyl) terephthalate.

3. The composition according to claim 1 or 2, wherein the chain extender (KV1) is 1,4-butanediol.

4. The composition according to any of claims 1 to 3, wherein the polyol (P1) is a polyether polyol.

5. The composition according to any of claims 1 to 4, wherein the polyisocyanate composition (IZ) comprises a polyisocyanate (PI) selected from the group consisting of phenylene 1,2-, 1,3- and/or 1,4-diisocyanate, triphenylmethane 4,4',4"-triisocyanate, naphthylene 1,5-diisocyanate (NDI), tolylene 2,4- and/or 2,6-diisocyanate (TDI), biphenyl 2,4'-, 4,4'- and/or 2,2'-diisocyanate, diphenylmethane 2,2'-, 2,4'- and/or 4,4'-diisocyanate (MDI), polyphenylpolymethylene polyisocyanate, xylylene 1,2-, 1,3- and/or 1,4-diisocyanate and m-tetramethylxylylene diisocyanate (TMXDI).

6. The composition according to any of claims 1 to 5, wherein the filler (F1) is selected from the group consisting of glass fibers, carbon fibers, aramid fibers, potassium titanate fibers, fibers composed of liquid-crystal polymers, metal fibers, polyester fibers, polyamide fibers, organic fibrous fillers and inorganic fibrous fillers.

7. The composition according to any of claims 1 to 6, wherein the filler (F1) has a length in the range from 3 mm to 4 mm and a diameter in the range from 1 µm to 20 pm, in each case determined in accordance with ASTM D578-98.

8. The composition according to any of claims 1 to 7, wherein the filler (F1) is comprised in an amount in the range from 40 to 60% by weight based on the total composition.

9. The composition according to any of claims 1 to 8, wherein the thermoplastic polyurethane has a Shore hardness in the range from 40 D to 90 D, determined in accordance with DIN ISO 7619-1.

10. A process for producing a composition, which comprises the step
(i) mixing of the components
(a) a thermoplastic polyurethane (TPU-1) obtained or obtainable by reaction of a polyisocyanate composition (IZ) with a polyol composition (PZ),
wherein the polyol composition (PZ) comprises at least one polyol (P1), a chain extender (KV1) and a chain extender (KV2), wherein the chain extenders are used in a molar ratio KV1:KV2 in the range from 20:1 to 3:1; and
(b) a filler (F1), wherein the filler (F1) is fibrous.

11. A composition obtained or obtainable by a process according to claim 10.

12. The use of a composition according to any of claims 1 to 9 or of a composition obtained or obtainable by a process according to claim 10 for producing a shaped body.

13. A shaped body comprising a composition according to any of claims 1 to 9 or a composition obtained or obtainable by a process according to claim 10.

## Revendications

1. Composition contenant
(a) un polyuréthane thermoplastique (TPU-1) obtenu ou pouvant être obtenu par transformation d'une composition de polyisocyanate (IZ) avec une composition de polyol (PZ),
la composition de polyol (PZ) contenant au moins un polyol (P1), un agent d'allongement de chaîne (KV1) et un agent d'allongement de chaîne (KV2), les agents d'allongement de chaîne étant utilisés dans un rapport de mélange molaire KV1:KV2 dans la plage de 20:1 à 3:1 ; et
(b) une charge (F1), la charge (F1) étant fibreuse.

2. Composition selon la revendication 1, l'agent d'allongement de chaîne (KV1) et/ou l'agent d'allongement de chaîne (KV2) étant choisi(s) dans le groupe constitué par le 1,2-éthanediol, le 1,3-propanediol, le 1,4-butanediol et le 1,6-hexanediol, le diéthylèneglycol, le triéthylèneglycol, l'hydroquinone-bis-2-hydroxyéthyléther et le téréphtalate de bis-2(hydroxyéthyle).

3. Composition selon la revendication 1 ou 2, l'agent d'allongement de chaîne (KV1) étant le 1,4-butanediol.

4. Composition selon l'une des revendications 1 à 3, le polyol (P1) étant un polyétherpolyol.

5. Composition selon l'une des revendications 1 à 4, la composition de polyisocyanate (IZ) contenant un polyisocyanate (PI) choisi dans le groupe constitué par le diisocyanate de 1,2-phénylène, de 1,3-phénylène et/ou de 1,4-phénylène, le 4,4',4"-triisocyanate de triphénylméthane, le 1,5-diisocyanate de naphtylène (NDI), le diisocyanate de 2,4-toluène et/ou de 2,6-toluène (TDI), le diisocyanate de 2,4'-diphényle, de 4,4'-diphényle et/ou de 2,2-diphényle, le diisocyanate de 2,2'-diphénylméthane, de 2,4'-diphénylméthane et/ou de 4,4'-diphénylméthane (MDI), le polyphénylpolyméthylènepolyisocyanate, le diisocyanate de 1,2-xylylène, de 1,3-xylylène et/ou de 1,4-xylylène et le diisocyanate de m-tétraméthylxylylène (TMXDI).

6. Composition selon l'une des revendications 1 à 5, la charge (F1) étant choisie dans le groupe constitué par les fibres de verre, les fibres de carbone, les fibres d'aramide, les fibres de titanate de potassium, les fibres de polymères à cristaux liquides, les fibres métalliques, les fibres de polyester, les fibres de polyamide, les charges fibreuses organiques et les charges fibreuses inorganiques.

7. Composition selon l'une des revendications 1 à 6, la charge (F1) présentant une longueur de la plage de 3 mm à 4 mm et un diamètre dans la plage de 1 µm à 20 µm, respectivement déterminés selon la norme ASTM D578-98.

8. Composition selon l'une des revendications 1 à 7, la charge (F1) étant contenue en une quantité dans la plage de 40 à 60% en poids, par rapport à la composition totale.

9. Composition selon l'une des revendications 1 à 8, le polyuréthane thermoplastique présentant une dureté Shore dans la plage de 40D à 90D, déterminée selon la norme DIN ISO 7619-1.

10. Procédé pour la préparation d'une composition comprenant l'étape de
(i) mélange des composants
(a) un polyuréthane thermoplastique (TPU-1) obtenu ou pouvant être obtenu par transformation d'une composition de polyisocyanate (IZ) avec une composition de polyol (PZ),
la composition de polyol (PZ) contenant au moins un polyol (P1), un agent d'allongement de chaîne (KV1) et un agent d'allongement de chaîne (KV2), les agents d'allongement de chaîne étant utilisés dans un rapport de mélange molaire KV1:KV2 dans la plage de 20:1 à 3:1 ; et
(b) une charge (F1), la charge (F1) étant fibreuse.

11. Composition obtenue ou pouvant être obtenue selon un procédé selon la revendication 10.

12. Utilisation d'une composition selon l'une des revendications 1 à 9 ou d'une composition obtenue ou pouvant être obtenue selon un procédé selon la revendication 10 pour la fabrication d'un corps façonné.

13. Corps façonné contenant une composition selon l'une des revendications 1 à 9 ou une composition obtenue ou pouvant être obtenue selon un procédé selon la revendication 10.
